# EUROPEAN PATENT APPLICATION

(11) **EP 0 921 037 A2**
(43) Date of publication of application: **09.06.1999**
(21) Application number: 98122819.0
(22) Date of filing: 01.12.1998
(51) Int. Cl.: B60R 11/02

(54) **A device for supporting telephone apparatus comprising a mobile phone, particularly for motor vehicles**

(30) Priority: 02.12.1997 IT TO970237 U
(71) Applicant: FIAT AUTO S.p.A., 10135 Torino (IT)
(72) Inventor: de Silva, Walter Maria, 20040 Basiglio (Milano) (IT); Maurer, Zbignew, 20017 Rho (Milano) (IT)
(74) Representative: Quinterno, Giuseppe

(57) **Abstract**

The invention relates to a device (1) for supporting telephone apparatus (4) comprising a supply and "hands free" base or kit (5) and a mobile phone (6), particularly for use in a motor vehicle. The device comprises a basic structure (2) to be fixed to the motor vehicle in a region behind the gear-shift lever and between the front seats, and a support element (3) disposed on the basic structure (2) and connected thereto for sliding along a predetermined path between a rest position and at least one advanced and partially raised working position (Figure 6) in which it projects at least partially beyond one end of the basic structure (2), enabling the keypad of the mobile phone (6) to be operated easily.

## Description

The present invention relates to a device for supporting telephone apparatus, particularly for use in a motor vehicle.

More specifically, the invention relates to a device for supporting telephone apparatus comprising a supply and so-called "hands free" base or kit and a mobile phone which can be coupled to the base or kit.

The support device according to the invention is characterized in that it comprises:
a basic structure which can be fixed to the motor vehicle in a region behind the gear-shift lever and between the front seats, and
a support element disposed on the basic structure and connected thereto for sliding along a predetermined path between a rest position in which it bears on the basic structure and at least one advanced and partially raised working position in which it projects at least partially beyond one end of the basic structure, the supply base or kit of the telephone apparatus being fixable to the sliding support element.

In a preferred embodiment, the sliding support element is coupled to the basic structure in a manner such that it can slide along a rising arcuate path during the movement from the rest position to the at least one working position.

The support device according to the invention is advantageously intended to be fitted between the front seats of the motor vehicle at a suitable distance behind the gear-shift lever. The supply and "hands free" base or kit is fixed on the sliding support element of the device and a mobile phone (a cell phone) is then arranged thereon in the usual manner.

The positioning of the device of the invention a certain distance behind the gear-shift lever enables the gear-shift lever and other devices to be operated without problems or obstruction.

In order to make a call with the mobile phone, the user first of all moves the sliding support element of the device according to the invention towards the advanced working position so that the supply and "hands free" base or kit and the mobile phone are disposed in a position closer to the gear-shift lever, this position being ergonomically more convenient for the operation of the keypad of the mobile phone.

Further characteristics and advantages of the invention will become clear from the following detailed description given purely by way of non-limiting example with reference to the appended drawings, in which:
Figure 1 is a side view of a support device according to the invention and of the associated telephone apparatus,
Figure 2 is a plan view of the device according to the invention,
Figure 3 is a section taken on the line III-III of Figure 2,
Figure 4 is a partial section through a basic structure included in a device according to the invention,
Figure 5 is a section taken on the line V-V of Figure 2,
Figure 6 is a section similar to that of Figure 5 and shows a sliding support element in the working position, and
Figures 7 and 8 show two details, indicated VII and VIII in Figures 5 and 6, respectively, on an enlarged scale.

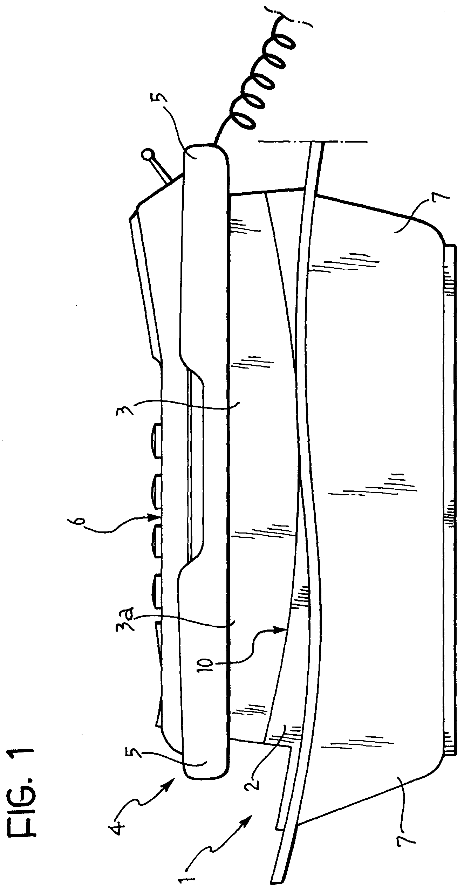

In the drawings, a support device according to the invention is generally indicated 1. The device comprises a basic structure 2 on which a support element, generally indicated 3, is mounted for sliding. The support element has an upper surface 3a (Figure 1) on which there is telephone apparatus of known type, such as that generally indicated 4 in Figure 1, comprising a supply and "hands free" base or kit 5 and a mobile phone 6 resting on and coupled to the base or kit 5. The base or kit 5 can advantageously be fixed to the sliding support element 3 by known means such as screws or the like.

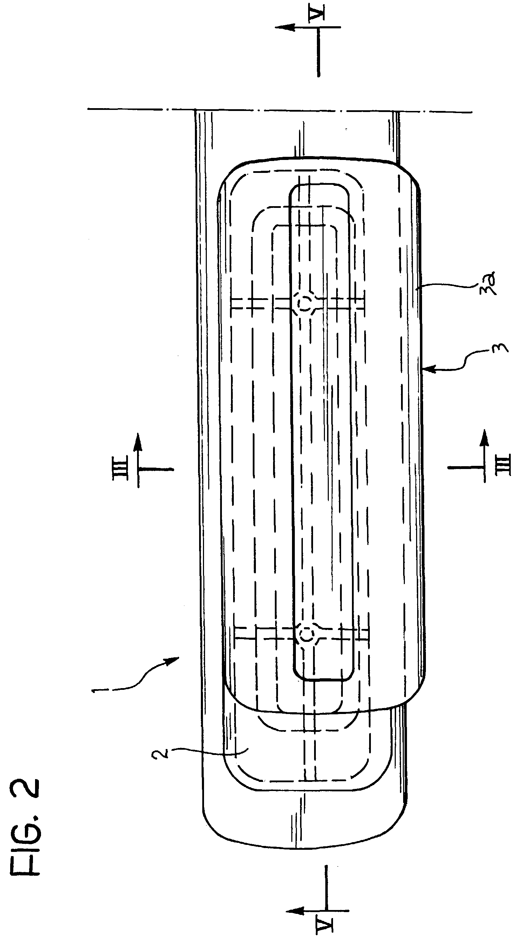

In the embodiment illustrated in the drawings, the basic structure 2 of the device according to the invention is formed in a manner such that it can be arranged and anchored in a tray-like container 7 (Figures 1-3, 5 and 6) already existing on the so-called "tunnel" which extends between the front seats of a motor vehicle. However, the invention is not intended to be limited in any way to an embodiment of this type.

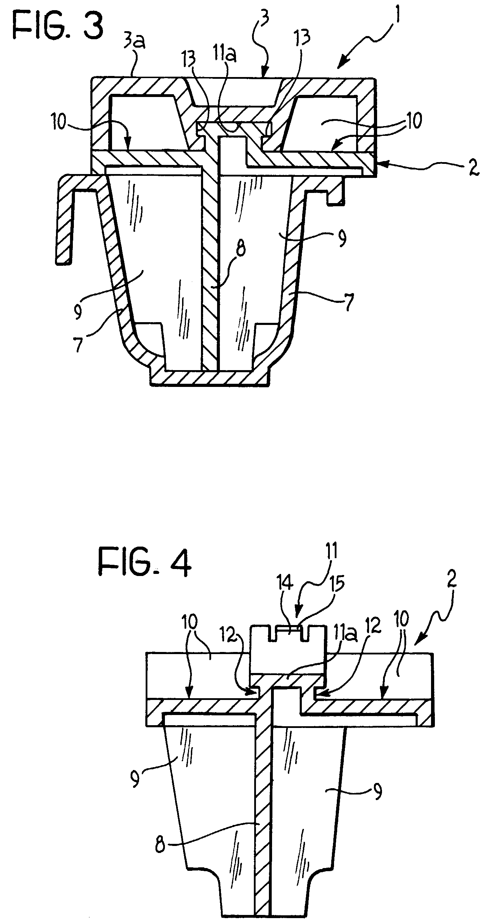

In the embodiment shown by way of example, the basic structure 2 (see in particular Figures 3 to 5) comprises a longitudinal vertical wall 8 intersected by transverse walls 9. The ends of the walls 8 and 9 are shaped in a manner corresponding to the profile of the side wall of the tray-like container 7.

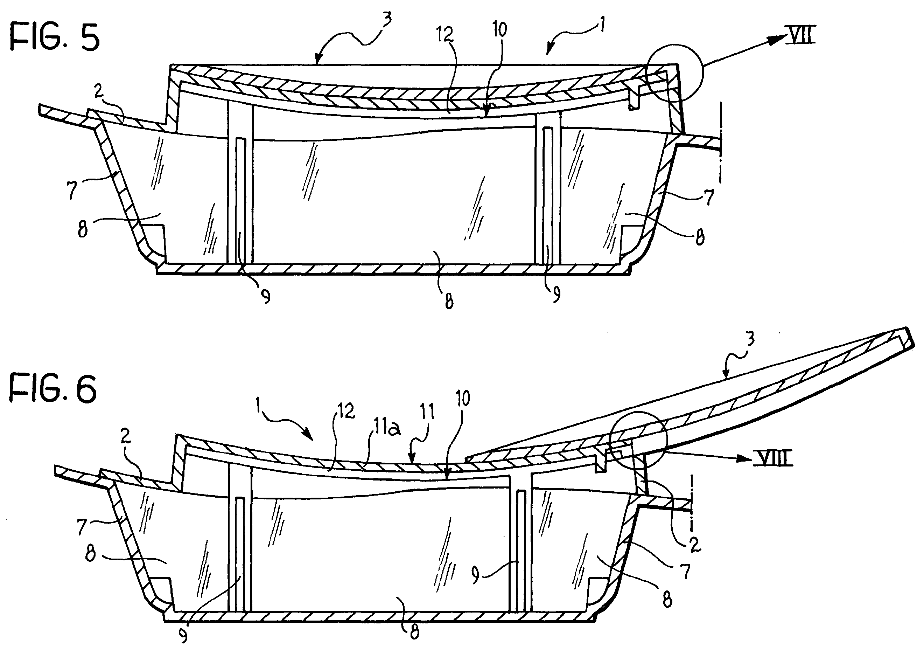

The basic structure 2 comprises an upper wall 10 which is arcuate in a longitudinal direction and has its concave side facing upwards. In its central region, the wall 10 has a guide element 11 which is substantially T-shaped in cross-section (Figures 3 and 4). The guide 11 is also arcuate in the same manner as the wall 10 and has an upper or transverse portion 11a (Figures 3 and 4) the side edges of which project and define, with the wall 10, two opposed guide channels 12. These guide channels 12 are also arcuate, as shown in Figures 5 and 6.

The sliding support element 3 has, in its central axial region, a seat 13 (Figure 3) of a shape complementary to that of the transverse portion 11a of the guide 11 of the basic structure. This seat is mounted on the guide with substantially prismatic coupling so that the support element 3 as a whole is movable relative to the basic structure 2 along an arcuate path between the rest position shown in Figure 5 and the working position shown in Figure 6.

In the rest position (Figure 5) the whole of the sliding support element 3 bears on the basic structure 2 and is in a substantially horizontal position.

In the working position (Figure 6), the sliding support element 3 projects at least partially beyond one end of the basic structure 2. Moreover, it adopts an upwardly inclined position. Stop means of known type and preferably those described

below with reference to Figures 4 to 8 may be provided for fixing the sliding support element 3 in the rest position and in the working position, respectively.

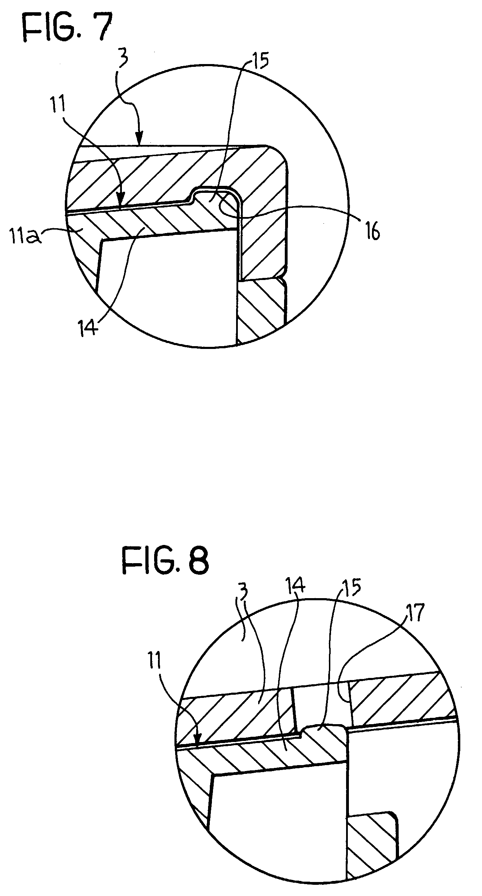

In the embodiment shown by way of example, a resilient tab 14 with an upper end projection or tooth 15 is formed at one end of the transverse portion 11a of the guide 11 (Figures 4, 7 and 8). This tooth or projection can snap-engage in a corresponding recess 16 (Figures 5 and 7) in the lower face and in the vicinity of one end of the sliding support element 3 in order to restrain the sliding support element 3 in the rest position shown in Figure 5. The tooth or projection 15 advantageously has a rounded profile so as to be easily releasable from the recess 16 when the user wishes to move the sliding support element 3 to the working position shown in Figure 6.

When the sliding support element 3 is in the working position, the tooth or projection 15 of the above-described tab 14 snap-engages in a hole 17 (Figure 8) provided in the central region of the element 3. The sliding support element 3 is thus fixed in the working position.

As already stated in the introduction to the present description, the support device according to the invention thus enables the telephone apparatus to be kept at rest in a retracted position in which it does not interfere in any way with the operation of members such as the gear-shift lever, the parking brake etc.

When the user wishes to make a call, he can move the telephone apparatus to a position ergonomically more convenient for the operation of the keypad simply by sliding the support member 3, relative to the stationary basic structure of the device, to the above-described working position. Once voice communication has been established, the user can return the support element 3 and the associated telephone apparatus to the retracted, rest position, continuing the call without the apparatus being able to interfere with the operation of the aforementioned members and devices.

## Claims

1. A support (1) for telephone apparatus (4) comprising a supply and "hands free" base or kit (5) and a mobile phone (6) which can be coupled to the base or kit (5), particularly for use in a motor vehicle,
characterized in that it comprises:
a basic structure (2) which can be fixed to the motor vehicle in a region behind the gear-shift lever and between the front seats, and
a support element (3) disposed on the basic structure (2) and connected thereto for sliding along a predetermined path between a rest position (Figure 5) in which it bears on the basic structure (2) and at least one advanced and partially raised working position (Figure 6) in which it projects partially beyond one end of the basic structure (2), the base or kit (5) of the telephone apparatus (4) being fixable to the sliding support element (3).

2. A support according to Claim 1, characterized in that the basic structure (2) and the sliding support element (3) are coupled to one another in manner such that the latter can slide along a rising arcuate path during the movement from the rest position (Figure 5) to the at least one working position (Figure 6).

3. A support according to Claim 1 or Claim 2, characterized in that it also comprises stop means (15, 16, 17) for fixing the support element (3) relative to the basic structure (2) in the rest position and in the at least one working position.

4. A support according to Claim 3, characterized in that the basic structure (2) has an upper guide (11) with a substantially T-shaped cross-section along which the support element (3) is slidable, the guide (11) having a stop projection or tooth (15) which can snap-engage in one of at least two seats (16, 17) provided in the support element (3) in positions spaced along the path.

5. A support according to Claim 4, characterized in that the stop projection or tooth (15) is formed in a resilient end tab (14) of the upper transverse portion (11a) of the guide (11).

6. A support according to any one of the preceding claims, characterized in that the basic structure (2) can be arranged and fixed in a container (7) already existing in the motor vehicle.
